# EUROPÄISCHE PATENTSCHRIFT

(11) **EP 3 389 116 B1**
(45) Veröffentlichungstag und Bekanntmachung des Hinweises auf die Patenterteilung: **15.07.2020**
(21) Anmeldenummer: 18166243.8
(22) Anmeldetag: 09.04.2018
(51) Int. Cl.: H01M 2/10

(54) **AKKUPACK SOWIE ELEKTROHANDWERKZEUGGERÄT**
BATTERY PACK AND HAND-HELD POWER TOOL
ACCUMULATEUR AINSI QUE MACHINE-OUTIL ÉLECTRIQUE PORTATIVE

(30) Priorität: 11.04.2017 DE 102017107868
(43) Veröffentlichungstag der Anmeldung: 17.10.2018
(73) Patentinhaber: Metabowerke GmbH, 72622 Nürtingen (DE)
(72) Erfinder: Stoll, Michael, 73240 Wendlingen (DE); Stickel, Wolfgang, 72660 Beuren (DE); Wolf, Alexander, 73240 Wendlingen (DE)
(74) Vertreter: Markfort, Iris-Anne Lucie

(56) Entgegenhaltungen:
- EP-A2- 1 309 019
- DE-A1-102015 010 989
- JP-A- H10 255 736
- US-A1- 2009 181 288

## Beschreibung

Die vorliegende Erfindung betrifft einen Akkupack, insbesondere für ein Elektrohandwerkzeuggerät, mit wenigstens einer Akkuzelle und/oder einem Akkuzellenblock und einem Gehäuse zur Aufnahme der wenigstens einen Akkuzelle, wobei das Gehäuse Belüftungsausnehmungen aufweist, über die Kühlluft aus der Umgebung in das Gehäuseinnere eindringen und wieder an die Umgebung abgegeben werden kann, und einen Zellenträger zur Lagerung der wenigstens einen Akkuzelle im Inneren des Gehäuses. Die Akkuzelle ist im Wesentlichen zylinderförmig ausgebildet und derart im Zellenträger gelagert, dass sie im Bereich ihrer Mantelfläche zumindest abschnittsweise von der Kühlluft im Gehäuseinneren umströmt werden kann.

Der Einsatz von Akkupacks zum Betrieb von Elektrohandwerkzeuggeräten hat in den vergangenen Jahren in der Praxis einen immer höheren Stellenwert eingenommen. Großer Vorteil solcher akkubetriebenen Elektrohandwerkzeuggeräte ist die höhere Flexibilität beim Arbeiten und insbesondere eine Unabhängigkeit von vorhandenen Stromquellen. Durch den Einsatz von Akkupacks kann damit insbesondere auch bei Außenarbeiten unbeschränkt von der Frage einer vorhandenen Stromquelle durchgeführt werden. Typischerweise umfassen Akkupacks mehrere in dem Gehäuse des Akkupacks aufgenommenen Akkuzellen, beispielsweise drei, vier, sechs oder acht Akkuzellen, die wiederaufladbar sind. Das Gehäuse des Akkupacks dient zur Aufnahme der Akkuzellen, aber auch zur lösbaren Verbindung mit dem Elektrohandwerkzeuggerät. Demgemäß weist das Elektrohandwerkzeuggerät üblicherweise eine Schnittstelle zur mechanischen und elektrischen Verbindung eines Akkupacks mit dem Elektrohandwerkzeuggerät auf.

Ein großer Vorteil von Akkupacks, die mittels Kühlluft aus der Umgebung gekühlt werden können (luftgekühlte Akkupacks), liegt in der besseren Leistungsabgabe der Akkupacks im Betrieb. Ein Überhitzen der Akkupacks wird hierdurch regelmäßig vorteilhaft verhindert. Hierdurch wird signifikant die Lebenszeit der Batteriezellen verlängert. Ein solcher luftgekühlter Akkupack ist beispielsweise aus der Druckschrift EP 1 952 518 A1 bekannt.

In der Praxis als nachteilig bei derartigen luftgekühlten Akkupacks hat sich in der Vergangenheit gezeigt, dass die Umgebungsluft gerade bei der Bearbeitung mit spanenden Werkzeugen oftmals metallische Staub- und Schmutzpartikel enthält, die über die Belüftungsausnehmungen in das Gehäuseinnere eindringen und sich im Bereich der Pole der Akkuzellen anlagern können. Nach einiger Zeit können solche Ablagerungen im Bereich der Pole der Akkuzellen zu Kurzschlüssen, beispielsweise zwischen den Akkuzellen oder zu anderen metallischen Komponenten im Inneren des Akkupacks führen. Gleiches gilt für über die Belüftungsausnehmungen eindringendes Wasser bzw. Luftfeuchtigkeit, das zudem zu Korrosion führen kann

Es hat sich in der Praxis grundsätzlich als vorteilhaft erwiesen, die Akkuzellen eines Akkupacks beabstandet zueinander anzuordnen, um das Risiko von Kurzschlüssen zu verringern. Diesbezüglich wird unter anderem auf die Druckschrift EP 1 927 147 B1 verwiesen.

Weiterhin ist es aus dem Stand der Technik bekannt, die Akkuzellen eines Akkupacks zum Schutz vor eindringendem Wasser und Staub in einem nach außen hin abgedichteten Gehäuse aufzunehmen. So offenbart die Druckschrift EP 3 051 608 A1 eine Lösung für eine wiederaufladbare Batterieeinheit mit einem nach außen hin abgedichteten Batteriegehäuse. Nachteilig bei dieser Lösung ist jedoch wiederum, dass die Akkuzellen im Inneren des abgedichteten Akkugehäuses nicht luftgekühlt sind und dementsprechend schnell überhitzen können. Akkupacks ohne Luftkühlung besitzen eine schlechtere Leistungsabgabe und geringere Lebensdauer.

Die Druckschrift EP 1 309 019 A2 beschreibt einen luftgekühlten Akkupack, bei dem die Akkuzellen im Bereich ihrer Mantelfläche einander kontaktieren und auf diese Weise zusammen mit zwei Seitenrippen des Zellenträgers luftdichten Bereiche im Inneren des Gehäuses definieren. Die Mantelfläche wird bei dieser Lösung nur zu einem Teil von Kühlluft umströmt, so dass die Kühlwirkung des Kühlluftstroms verringert ist.

Weitere Lösungen aus dem Stand der Technik sind in den Druckschriften DE 100 55 159 A1, US 2010/0116570 A1, US 2013/0089763 A1, JP H10-255736 A, DE 10 2015 010989 A1 US 2009/181288 A1 und JP 2005-209 369 A bekannt.

Eine Aufgabe der vorliegenden Erfindung besteht somit darin, die aus dem Stand der Technik bekannt gewordenen Nachteile zu verringern und einen verbesserten Akkupack bereitzustellen.

Als Lösung hierfür schlägt die vorliegende Erfindung einen Akkupack mit den Merkmalen des Anspruchs 1 sowie ein Elektrohandwerkzeuggerät mit den Merkmalen des Anspruchs 10 vor.

Demgemäß wird ein Akkupack, insbesondere für ein Elektrohandwerkzeuggerät, vorgeschlagen, mit wenigstens einer Akkuzelle und einem Gehäuse zur Aufnahme der wenigstens einen Akkuzelle, wobei das Gehäuse Belüftungsausnehmungen aufweist, über die Kühlluft aus der Umgebung in das Gehäuseinnere eindringen und wieder an die Umgebung abgegeben werden kann, und einen Zellenträger zur Lagerung der wenigstens einen Akkuzelle im Inneren des Gehäuses. Der Zellenträger weist luftdicht geschlossene Seitenwände mit einer Anzahl von Lagerabschnittenzur Lagerung der polseitigen Endabschnitte der aufzunehmenden Akkuzellen auf, deren Innenumfang dem Außenumfang der aufzunehmenden Akkuzellen im Bereich ihrer polseitigen Endabschnitte entspricht, derart dass die Akkuzellen in Abstand zueinander gehalten werden und im Bereich ihrer Mantelfläche von der Kühlluft im Gehäuseinneren umströmt werden können, wobei die Akkuzelle im Bereich ihrer polseitigen Endabschnitte fest und nahezu spielfrei im Zellenträger gelagert ist, so dass die resultierenden Polbereiche des Akkupacks luftdicht innerhalb des Gehäuses aufgenommen sind. Der Zellenträger weist ferner wenigstens zwei Druckausgleichsvorrichtungen auf, die im Falle eines vorbestimmten Überdrucks an einem der Polbereiche des Akkupacks einen Druckausgleich, insbesondere mit dem Gehäuseinneren und über die Belüftungsausnehmungen des Gehäuses mit der Umgebung, ermöglichen und von denen jede einer der Seitenwände des Zellenträgers zugeordnet ist.

Die Belüftungsausnehmungen im Gehäuse dienen dem Luftaustausch mit der Umgebung. Dabei kann die Umgebung sowohl die Außenluft sein als auch einen Kühlluftstrom umfassen, der von einem verbundenen Elektrowerkzeuggerät erzeugt und zumindest über einen Teil der Belüftungsausnehmungen in das Gehäuseinnere des Akkupacks eingeleitet wird. In gleicher Weise können die Belüftungsausnehmungen auch dann, wenn der Akkupack in einem korrespondierenden Ladegerät aufgenommen ist, zumindest teilweise als Lufteinlassöffnungen für einen von dem Ladegerät erzeugten Kühlluftstrom genutzt werden.

Die Akkuzelle ist im Wesentlichen zylinderförmig, wobei der Begriff "zylinderförmig" nicht auf kreiszylinderförmige Querschnitte beschränkt ist, sondern im mathematischen Sinne durch eine wie auch immer geartete Grundfläche, die entlang einer vorgegebenen Kurve bewegt wird, gebildet wird. Gemäß der mathematischen Definition umfasst die zylindrische Form eine Mantelfläche sowie zwei Stirnflächen. Im Fall der Akkuzelle sind die Pole der Akkuzelle im Bereich der Stirnflächen angeordnet und bilden jeweils die resultierenden Polbereiche des Akkupacks aus.

Die Besonderheit der vorliegenden Erfindung liegt darin, dass die Akkuzelle nicht vollständig von der Kühlluft umströmt werden kann, sondern nur im Bereich ihrer Mantelfläche. Die empfindlichen Pole der Akkuzelle und damit Polbereiche des Ackupacks, an denen eine Kurzschlussbildung und/oder Korrosion möglich sind, sind indes luftdicht innerhalb des Gehäuses aufgenommen, so dass weder Kühlluft noch darin enthaltene Partikel (Staub, Metall oder Wasser) aus der Umgebung oder Feuchtigkeit in Kontakt mit den Polen der wenigstens einen Akkuzelle gelangen können. Auf diese Weise werden Kurzschlüsse, wie sie in der Vergangenheit bei luftgekühlten Akkupacks auftreten konnten, und Korrosionsprobleme sicher und zuverlässig vermieden. Zugleich wird jedoch sichergestellt, dass dennoch ein Großteil der erzeugten Wärmeenergie an die Kühlluft im Inneren des Gehäuses abgegeben werden kann, wodurch das Risiko von Überhitzungen des Akkupacks verringert wird.

Definitionsgemäß sind die Pole im Bereiche der Stirnflächen der Akkuzellen angeordnet. Die polseitigen Endabschnitte umfassen jedoch nicht nur die Stirnflächen sondern auch einen angrenzenden Abschnitt der Mantelfläche der zugehörigen Ackuzelle, wobei gerade dieser Abschnitt der Mantelfläche im Übergangsbereich zu den Stirnflächen zur Lagerung der Akkuzellen genutzt wird. Diese polseitigen Endabschnitte der Akkuzellen haben eine spezifische Außenkontur und einen vorgegebenen Außenumfang. Die Lagerabschnitte sind dementsprechend so ausgebildet, dass deren Innenumfang dem Außenumfang der aufzunehmenden Akkuzellen an ihren polseitigen Endabschnitten entspricht. Die Akkuzellen können also mit einem möglichst geringen Spiel in die Lagerabschnitte der geschlossenen Seitenwände des Zellenträgers eingesetzt und auf diese Weise zuverlässig gelagert werden.

Aus der Praxis ist bekannt, dass die Akkuzellen, beispielsweise wenn sie als Lithiumionenakkuzellen ausgebildet sind, bei Überhitzung über Öffnungen (vgl. beispielsweise US 2010/0116570 A1) oder ein Ventil am Plus-Pol große Mengen an Gas ausstoßen. Demgemäß besteht das Risiko, dass ein komplett abgedichteter Polbereich eines Akkupacks beim Abgasen einer oder mehrerer Zellen zu einer Beschädigung des Akkupacks führen könnte. Um auch diesem möglichen Problem zu begegnen, ist erfindungsgemäß weiter vorgesehen, dass der Zellenträger wenigstens zwei Druckausgleichsvorrichtungen aufweist, die im Falle eines vorbestimmten Überdrucks an einem der Polbereiche des Akkupacks einen Druckausgleich, insbesondere mit dem Gehäuseinneren und über die Belüftungsausnehmungen des Gehäuses mit der Umgebung, ermöglichen. Eine solche Druckausgleichsvorrichtung ist, da die Seitenwände des Zellenträgers geschlossen ausgebildet sind und zur Abgrenzung des Gehäuseinneren von den luftdicht umschlossenen Polbereichen dienen soll, an jeder der Seitenwände ausgebildet.

Es kann weiter vorgesehen sein, dass der Akkupack eine Anzahl von innerhalb des Zellenträgers zueinander im Wesentlichen parallel angeordneten Akkuzellen und/oder Akkuzellenblöcken umfasst, die im Bereich ihrer polseitigen Endabschnitte derart im Zellenträger angeordnet sind, dass sich die Pole der Akkuzellen nicht untereinander berühren.

Durch das Vorsehen mehrerer Akkuzellen die in Reihe und/oder parallel zueinander geschaltet sein können, kann die Leistung, die das Akkupack abzugeben vermag, vergrößert und/oder die Leistungsabgabedauer verlängert werden. Die polseitigen Endabschnitte der im Wesentlichen parallel innerhalb des Zellenträgers angeordneten Akkuzellen bilden die beiden resultierenden Polbereich des Akkupacks aus.

Nachfolgend wird zur Vereinfachung stets auf eine Ausführungsform eines Akkupacks mit mehreren Akkuzellen, beispielsweise mit zwei, drei, vier, sechs oder acht Akkuzellen, Bezug genommen. Selbstverständlich sind die in Zusammenhang damit beschriebenen Merkmale jedoch auch auf einen Akkupack mit nur einer Akkuzelle anwendbar.

Es kann weiter vorgesehen sein, dass die Seitenwände des Zellenträgers geschlossen sind und nur im Bereich der Lagerabschnitte seitliche Ausnehmungen zur elektrischen Kontaktierung der Pole der Akkuzellen aufweisen. Alternativ zu dieser Ausgestaltung ist es grundsätzlich auch denkbar, dass die Lagerabschnitte selbst Mittel zur elektrischen Kontaktierung der Pole der Akkuzellen aufweisen. In dem Fall, in dem im Bereich der Lagerabschnitte seitliche Ausnehmungen zur elektrischen Kontaktierung der Pole der Akkuzellen vorgesehen sind, dienen die ansonsten geschlossenen Seitenwände des Zellenträgers zur Abgrenzung des luftdurchströmten Gehäuseinneren und dem luftdicht abgeschlossenen Gehäuseteil zur Aufnahme der Polbereiche des Akkupacks innerhalb des Gehäuses.

Ferner kann vorgesehen sein, dass die Druckausgleichsvorrichtung eine Sollbruchstelle, eine Ausnehmung, die mit einer Membran, einem Dichtungsteil oder dergleichen abgedeckt ist, oder ein Ventil umfasst. So stellt beispielsweise eine vorgegebene Sollbruchstelle eine einfach herzustellende und kostengünstige Lösung für eine Druckausgleichsvorrichtung dar, während eine abgedeckte Ausnehmung im Falle einer Zerstörung der Abdeckung (sei es eine Membran, ein Dichtungsteil oder dergleichen) zumindest reparierbar, aber etwas teurer in der Herstellung ist. Schließlich stellt ein Ventil eine Lösung dar, die über die gesamte Lebensdauer des Akkupacks immer wieder zum Einsatz kommen kann; jedoch ist ein solches Ventil in der Herstellungsmontage vergleichsweise kostenintensiv.

Es kann ferner vorgesehen sein, dass das Gehäuse wenigstens einen von dem Rest des Gehäuses lösbaren Gehäuseteil umfasst, sowie wenigstens eine zwischen dem lösbaren Gehäuseteil und dem Rest des Gehäuses vorgesehene Dichtung zur luftdichten Abdichtung der Polbereiche des Akkupacks.

Insbesondere kann vorgesehen sein, dass der lösbare Gehäuseteil wenigstens einen Deckel umfasst, der lösbar mit dem Zellenträger verbindbar ist. In einer denkbaren Ausgestaltungsvariante sind zwei Seitendeckel vorgesehen, die jeweils im Bereich der Pole bzw. Stirnflächen der aufgenommenen Akkuzellen angeordnet sind und lösbar mit dem die Akkuzellen aufnehmenden Zellenträger verbindbar sind. Bei dieser Lösung wird das Gehäuse zur Aufnahme der Akkuzellen im Wesentlichen durch den Zellenträger und die beiden seitlichen Deckel gebildet.

Es kann weiter vorgesehen sein, dass zusätzlich noch ein Gehäusedeckel als lösbares Gehäuseteil auf den Zellenträger aufgesetzt werden kann, der beispielsweise die Belüftungsausnehmungen und/oder eine Struktur zur lösbaren Verbindung mit einem Elektrohandwerkzeuggerät und/oder Kontaktelemente zur elektrischen Verbindung mit einem Elektrohandwerkzeuggerät oder einem Akkuladegerät aufweist.

Es kann weiter vorgesehen sein, dass die Dichtung als umlaufende Dichtung an dem einem oder jedem (im Falle von mehreren) lösbaren Gehäuseteil vorgesehen ist. So kann beispielsweise eine einzige umlaufende Dichtung an dem lösbaren Gehäuseteil vorgesehen sein. Alternativ oder zusätzlich können auch mehrere weitere Dichtungen vorgesehen sein, so dass bei einer ersten Ausführungsform eine einzige Dichtung einen luftdichten Raum abdichtet, in den mehrere Pole hineinragen, während bei einer anderen Ausführungsform Untergruppen von Polen oder einzelne Pole gegenüber anderen Untergruppen oder den restlichen Polen luftdicht mittels mehrerer Dichtungen abgedichtet werden können.

Weiterhin kann die Dichtung eine Nut-Feder-Geometrie und/oder eine Elastomerdichtung umfassen. So kann beispielsweise vorgesehen sein, dass eine umlaufende Nut-Feder-Geometrie am Zellenträger und an dem oder den seitlichen Deckeln ausgestaltet ist, die den zugehörigen Polbereich des Akkupacks vom Gehäuseinneren dicht abschließt. Eine solche Dichtung kann alternativ jedoch auch als eine eingelegte oder eingespritzte Dichtung aus einem elastischen Material wie Moosgummi, Filz, Kunststoff oder dergleichen ausgebildet sein.

Schließlich wird ein Elektrohandwerkzeuggerät mit einem Elektromotor sowie wenigstens einem hiermit lösbar verbindbaren Akkupack mit den vorstehenden Merkmalen vorgeschlagen, wobei wenigstens eine Schnittstelle zur mechanischen und elektrischen Verbindung des Akkupacks mit dem Elektrohandwerkzeuggerät vorgesehen ist.

Weitere Merkmale der Erfindung sind in der nachfolgenden Figurenbeschreibung und den Ansprüchen erläutert.

Die Figurenbeschreibung beschreibt eine mögliche Ausführungsform der vorliegenden Erfindung im Detail, wobei auch unabhängige Merkmale der Erfindung in Kombination miteinander dargestellt sind. Selbstverständlich kann ein Fachmann diese jedoch auch losgelöst voneinander betrachten und diese zu weiteren sinnvollen Unterkombinationen zusammenfügen, ohne hierfür erfinderisch tätig werden zu müssen.

Die Figuren zeigen schematisch:
- Figur 1: eine isometrische Ansicht eines bestückten Zellenträgers eines erfindungsgemäßen Akkupacks;
- Figur 2: ein als Seitendeckel des Zellenträgers gemäß Figur '1 ausgebildetes lösbares Gehäuseteil;
- Figur 3: einen teilbestückten Zellenträger gemäß Figur 3 in isometrischer Darstellung;
- Figur 4: einen erfindungsgemäßen Akkupack in längsgeschnittener Darstellung;
- Figur 5A: eine Schnittansicht gemäß der Schnittlinie A-A der Figur 4 des erfindungsgemäßen Akkupacks; und
- Figur 5B: eine Schnittansicht entlang der Schnittlinie B-B der Figur 4 des erfindungsgemäßen Akkupacks.

Die Figuren zeigen eine erfindungsgemäße Ausführungsform eines Akkupacks für ein Elektrohandwerkzeuggerät, das allgemein mit dem Bezugszeichen 10 bezeichnet ist.

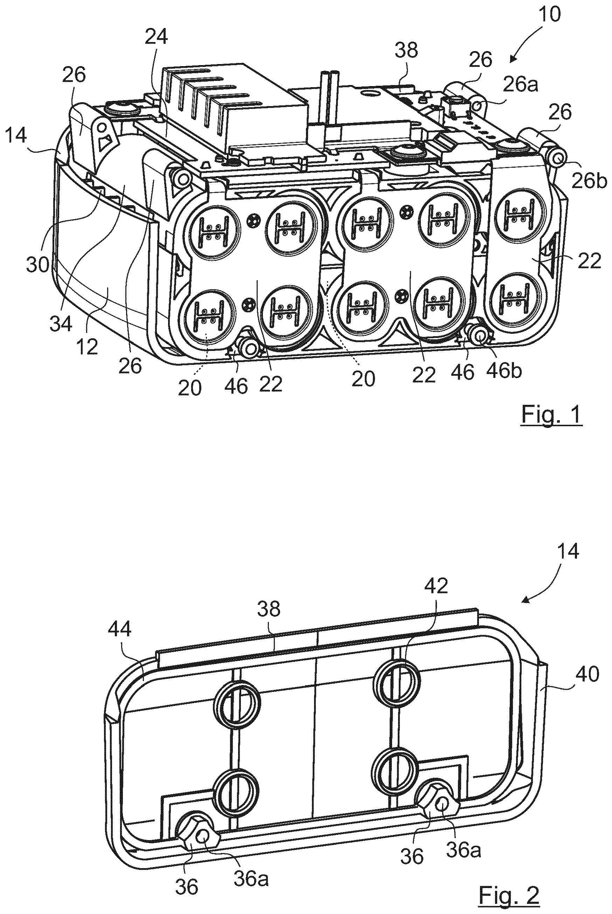

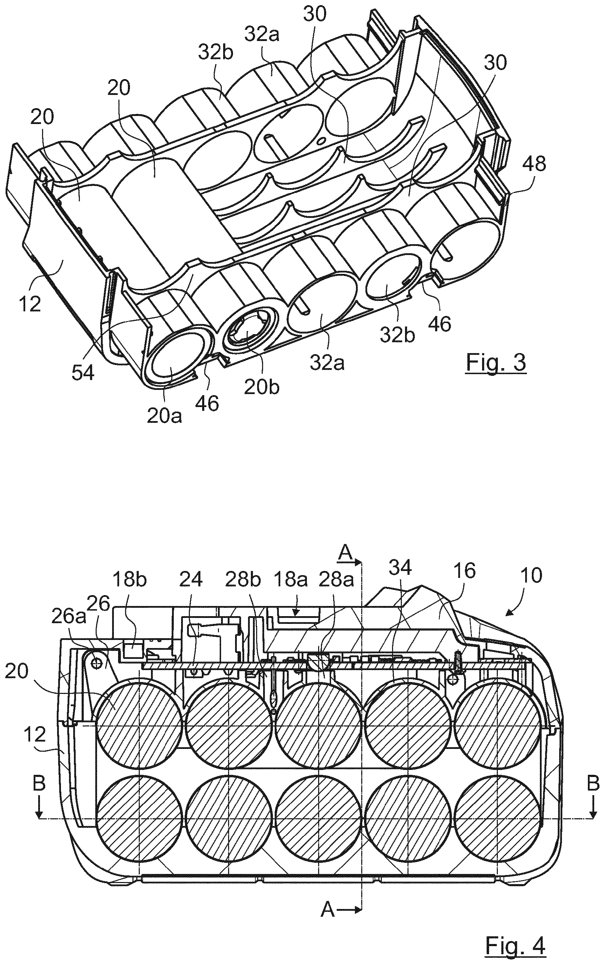

Das Gehäuse eines erfindungsgemäßen Akkupacks 10 setzt sich aus mehreren das Gehäuse bildenden Gehäuseteilen wie folgt zusammen: einem Zellenträger 12, zwei Seitendeckel 14 (vgl. auch Figur 2), die seitlich an dem Zellenträger 12 lösbar angebracht werden, sowie wenigstens einem Gehäusedeckel 16 (vgl. Figur 4), der auf den Zellenträger 12 lösbar aufgesetzt werden kann. In der Figur 1 sind dabei der vordere Seitendeckel 14 und der obere Gehäusedeckel 16 als lösbare Gehäuseteile zur besseren Darstellung der innenliegenden Komponenten des Akkupacks 10 weggelassen.

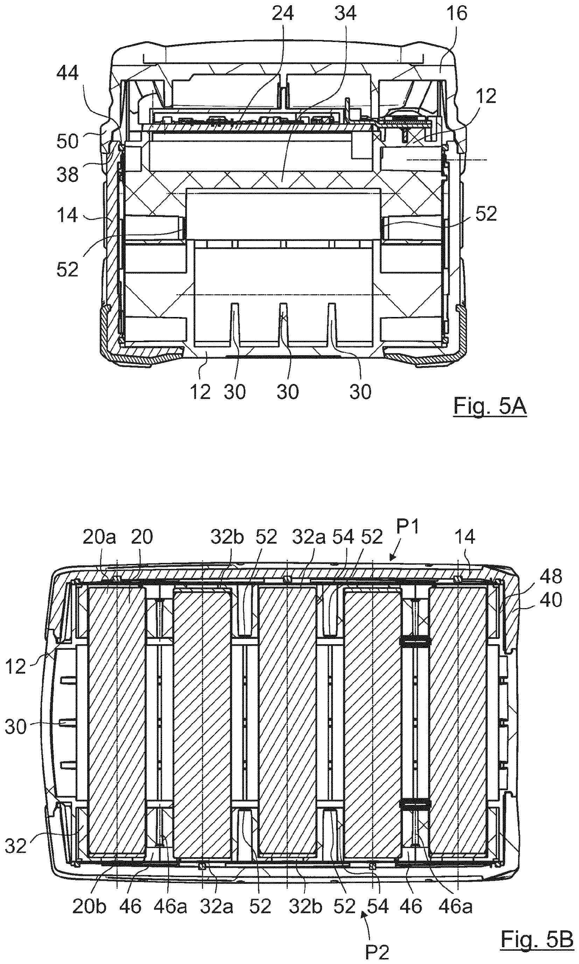

Der Gehäusedeckel 16 ist insbesondere in den Figuren 4 und 5A gezeigt und umfasst mehrere Belüftungsausnehmungen 18a und 18b, über die Kühlluft aus der Umgebung des Akkupacks 10 in das Gehäuseinnere eindringen und wieder an die Umgebung abgegeben werden kann. Bei dem vorliegenden Akkupack 10 handelt es sich somit um ein sogenanntes luftgekühltes Akkupack, bei dem die im Gehäuseinneren aufgenommenen Akkuzellen 20 zumindest im Bereich ihrer Mantelfläche von der Kühlluft umströmt werden können.

In der dargestellten Ausführungsform umfasst das erfindungsgemäße Akkupack 10 zehn Akkuzellen 20, die im Wesentlichen parallel zueinander angeordnet sind. Die Akkuzellen 20 werden über Leiterbleche 22 im Bereich ihrer Pole 20a und 20b elektrisch kontaktiert, wobei die Leiterbleche 22 wiederum elektrisch mit einer Leiterplatte 24 verbunden sind. Die Leiterplatte 24 kann mit einer Reihe von Elektronickomponenten bestückt sein, auf die nachfolgend nicht näher eingegangen werden soll. Wie in der Figur 1 und der Figur 5A deutlich zu erkennen ist, ist die Leiterplatte 24 über nicht näher bezeichnete Schrauben lösbar mit dem Zellenträger 12 verbunden.

Zur Befestigung des Gehäusedeckels 16 weist der Zellenträger 26 zudem Befestigungsvorsprünge 26 mit Gewindeausnehmungen 26a auf, in die entsprechend Befestigungsschrauben 26b (vgl. Figur 1) zur Befestigung des Gehäusedeckels 16 eingeschraubt werden können. Weiterhin umfasst der erfindungsgemäße Zellenträger 12 auf seiner der Leiterplatte zugewandten Oberseite 34 Ausnehmungen 28a und 28b auf, die beispielsweise zur Einführung eines Temperaturfühlers oder dergleichen ausgehend von der Leiterplatte 24 genutzt werden können.

Um eine möglichst effiziente Umströmung der aufgenommenen Akkuzellen 20 im Gehäuseinneren, das heißt insbesondere im Inneren des Zellenhalters 12, zu gewährleisten, weist dieser Lüftungsrippen 30 auf (vgl. Figur 1 und 3), die sowohl zur Abstützung der unteren Reihe der aufgenommenen Akkuzellen dienen, als auch eine geführte Luftführung durch den Zellenträger 12 ermöglichen. Eine besonders effiziente Umströmung der Akkuzellen 20 im Bereich ihrer Mantelflächen im Inneren des Zellenträgers 12 wird auch dadurch erreicht, dass auch die obere Reihe der aufgenommenen Akkuzellen nicht vollständig im Bereich ihrer Mantelflächen von dem Zellenträger 12 umgeben sind, sondern nur teilflächig im Bereich der Oberseite 34 des Zellenträgers 12. Der Abschnitt der Mantelflächen der aufgenommenen Akkuzellen, der der darunterliegenden Reihe von Akkuzellen gegenüber liegt, ist indes vollkommen frei und ungestützt, sodass in diesem Bereich die Kühlluft ungehindert zirkulieren kann.

Damit die aufgenommenen Akkuzellen 20 nicht nur in der gewünschten Weise parallel zueinander angeordnet, sondern auch in Abstand zueinander gehalten werden können, um auf diese Weise Kurzschlüsse zu vermeiden (vgl. Figuren 4 und 5B) weist der Zellenträger Lagerabschnitte 32a und 32b auf, die zur Lagerung der Ackuzellen 20 im Bereich ihrer polseitigen Endabschnitte vorgesehen sind. Die Lagerabschnitte 32a und 32b sind dabei derart dimensioniert, dass die Akkuzellen fest in dem Zellenträger 12 gelagert und nahezu spielfrei darin aufgenommen sind. Weiterhin ist ein Lagerabschnitt 32a für eine Akkuzelle seitlich geöffnet, um ein Einschieben der Akkuzelle zu ermöglichen, während der korrespondiere andere Lagerabschnitt 32b eine Lagerschulter zur axialen Lagerung (bezüglich der Längsachse der aufgenommenen Akkuzelle) aufweist. Zu der elektrischen Kontaktierung ist selbstverständlich zusätzlich eine zentrale Ausnehmung im Bereich des Lagerabschnitts 32b vorgesehen (vgl. Figuren 3 und Fig. 5B).

Wie bereits erwähnt, sind auch die Seitendeckel 14 des Gehäuses des Akkupacks 10 als lösbare Gehäuseteile ausgebildet. In der Figur 2 ist besonders gut erkennbar, dass der Seitendeckel 14 Befestigungsfortsätze 36 aufweist, die Bohrungen 36a zur Aufnahme einer Schraube umfassen. Die Schrauben 46b (vgl. Fig. 1) können durch die Bohrungen 36a des Befestigungsfortsatzes 36 in korrespondierende Gewindebohrungen 46a im Bereich der Befestigungsabschnitte 46 des Zellenträgers 12 eingeschraubt werden.

Weiterhin weist der Seitendeckel 14 eine obere Haltekante 38 auf, die im montierten Zustand des Akkupacks 10 von einer korrespondierenden Haltekante 50 des Gehäusedeckels 16 übergriffen werden kann (vgl. Figur 5A) sowie eine Haltekante 40, die ihrerseits eine korrespondierende Haltekante 48 (vgl, Figur 3 und Figur 5B) des Zellenträgers 12 im montierten Zustand des Akkupacks 10 zu übergreifen vermag.

Auf der Innenseite der Seitendeckel 14 können zusätzlich Lagerfortsätze 42 vorgesehen sein, die der lagernden Klemmung der Leiterbleche 22 dienen können.

Um eine Abdichtung des Akkupacks im Bereich der resultierenden Polbereiche P1 und P2 (vgl. Fig. 5B) des Akkupacks 10 zu erreichen, ist zudem jeweils eine umlaufende Sicherung 44 vorgesehen, die im montierten Zustand des zugehörigen Seitendeckels 14 am Zellenhalter 12 den resultierenden Polbereiche P1 bzw. P2 des Akkupacks 10 luftdicht gegenüber der Umgebung abzudichten vermag. Diese Dichtung 44 kann beispielsweise als Elastomerdichtung oder als Nutfedergeometrie ausgebildet sein.

Aus einer Zusammenschau der Figuren 5A und 5B ergibt sich zudem, dass der Zellenträger 12 über (mit Ausnahme der Lagerabschnitte 32a und 32b mit ihren seitlichen Ausnehmungen) luftdicht geschlossene Seitenwände 54 verfügt, die eine nahezu luftdichte Abdichtung der Polbereiche P1 und P2 des Akkupacks 10 gegenüber dem luftdurchströmten Gehäuseinneren ermöglicht. Indem die Akkuzellen 20 nahezu spielfrei in den Lagerabschnitten 32a und 32b aufgenommen sind, kann über die seitlichen Ausnehmungen der Lagerabschnitte 32a, 32b kein Luftaustausch zwischen dem Gehäuseinneren und den Polbereichen P1 und P2 erfolgen. Zudem sind auch in den Gewindebohrungen 46a im montierten Zustand des Akkupacks 10 Befestigungsschrauben aufgenommen, die einen Luftaustausch hierüber verhindern.

Um jedoch sicherzustellen, dass ein Ausgasen der Akkuzellen im Falle einer Überhitzung einer oder mehrerer Akkuzellen im Inneren des Akkupacks 10 möglich bleibt (und um so potentielle Explosionen zu vermeiden) sind im Bereich der Seitenwände 54 Sollbruchstellen 52 vorgesehen, deren verminderte Wandstärke im Falle eines Überdrucks in einem der Polbereiche P1 oder P2 ein Durchbrechen der jeweiligen Seitenwand 54 ermöglicht und damit einen Luftaustausch in das Gehäuseinnere. Über die ohnehin vorgesehenen Belüftungsöffnungen 18a und 18b des Gehäuses kann dann ein Ausgasen problemlos erfolgen.

Insgesamt ermöglicht die spezifische Gestaltung des Gehäuses des erfindungsgemäßen Akkupacks zum einen eine Luftkühlung der darin aufgenommenen Akkuzellen, wodurch die Lebensdauer des Akkupacks signifikant erhöht wird. Zum anderen wird jedoch sichergestellt, dass mit der Kühlluft mitgeführte metallische Staubpartikel und/oder Luftfeuchtigkeit nicht in den Bereich der Pole der Akkuzellen gelangen und dadurch Kurzschlüsse und insbesondere eine Beschädigung des Akkupacks erreichen können. Auf diese Weise wird ein besonders langlebiges und robustes Akkupack bereitgestellt.

## Patentansprüche

1. Akkupack (10), insbesondere für ein Elektrohandwerkzeuggerät, mit:
wenigstens einer im wesentlichen zylinderförmig ausgebildeten Akkuzelle (20) mit einer Mantelfläche und zwei Polen im Bereich der Stirnflächen und einem Gehäuse zur Aufnahme der wenigstens einen Akkuzelle (20),
wobei das Gehäuse Belüftungsausnehmungen (18a, 18b) aufweist, über die Kühlluft aus der Umgebung in das Gehäuseinnere eindringen und wieder an die Umgebung abgegeben werden kann, und einen Zellenträger (12) zur Lagerung der wenigstens einen Akkuzelle (20) im Inneren des Gehäuses,
**dadurch gekennzeichnet, dass** der Zellenträger (12) luftdicht geschlossene Seitenwände (54) mit einer Anzahl von Lagerabschnitten (32a, 32b) zur Lagerung der polseitigen Endabschnitte der aufzunehmenden Akkuzellen (20) aufweist, deren Innenumfang dem Außenumfang der aufzunehmenden Akkuzellen (20) im Bereich ihrer polseitigen Endabschnitte entspricht, derart dass die Akkuzellen (20) in Abstand zueinander gehalten werden und im Bereich ihrer Mantelfläche zumindest abschnittsweise von der Kühlluft im Gehäuseinneren umströmt werden können,
wobei die Akkuzelle (20) im Bereich ihrer polseitigen Endabschnitte fest und nahezu spielfrei im Zellenträger (12) gelagert ist, so dass die resultierenden Polbereiche (P1, P2) des Akkupacks (20) luftdicht innerhalb des Gehäuses aufgenommen sind,
und wobei der Zellenträger wenigstens zwei Druckausgleichsvorrichtungen aufweist, die im Falle eines vorbestimmten Überdrucks an einem der Polbereiche des Akkupacks einen Druckausgleich, insbesondere mit dem Gehäuseinneren und über die Belüftungsausnehmungen des Gehäuses mit der Umgebung, ermöglichen und von denen jede einer der Seitenwände (54) des Zellenträgers (12) zugeordnet ist.

2. Akkupack (10) nach Anspruch 1,
**dadurch gekennzeichnet**, der Akkupack (10) eine Anzahl von innerhalb des Zellenträgers (12) zueinander im Wesentlichen parallel angeordneten Akkuzellen (20) umfasst, die im Bereich ihrer polseitigen Endabschnitte derart im Zellenträger angeordnet sind, dass sich die Pole (20a, 20b) der Akkuzellen (20) nicht untereinander berühren.

3. Akkupack (10) nach Anspruch 1 oder 2,
**dadurch gekennzeichnet, dass** die Seitenwände (54) des Zellenträgers (12) geschlossen sind und nur im Bereich der Lagerabschnitte (32a, 32b) seitliche Ausnehmungen zur elektrischen Kontaktierung der Pole (20a, 20b) der Ackuzellen (20) aufweisen.

4. Akkupack (10) nach einem der vorhergehenden Ansprüche,
**dadurch gekennzeichnet, dass** die Druckausgleichsvorrichtung eine Sollbruchstelle (52), eine Ausnehmung, die mit einer Membran oder einem Dichtungsteil abgedeckt ist, oder ein Ventil umfasst.

5. Akkupack (10) nach einem der vorhergehenden Ansprüche,
**dadurch gekennzeichnet, dass** das Gehäuse wenigstens einen von dem Rest des Gehäuses lösbaren Gehäuseteil umfasst sowie wenigstens eine zwischen dem lösbaren Gehäuseteil und dem Rest des Gehäuses vorgesehene Dichtung (44) zur luftdichten Abdichtung der Polbereiche (P1, P2) des Akkupacks (10).

6. Akkupack (10) nach Anspruch5,
**dadurch gekennzeichnet, dass** der wenigstens eine lösbare Gehäuseteil wenigstens einen Deckel (16) umfasst, der lösbar mit dem Zellenträger (12) verbindbar ist.

7. Akkupack (10) nach Anspruch 5 oder 6,
**dadurch gekennzeichnet, dass** der lösbare Gehäuseteil wenigstens einen Gehäusedeckel (16) umfasst, der auf den Zellenträger (12) aufgesetzt werden kann und beispielsweise die Belüftungsausnehmungen (18a, 18b) und/oder eine Struktur zur lösbaren Verbindung mit einem Elektrohandwerkzeuggerät und/oder Kontaktelemente zur elektrischen Verbindung mit einem Elektrohandwerkzeuggerät oder einem Akkuladegerät aufweist

8. Akkupack nach Anspruch 5, 6 oder 7,
**dadurch gekennzeichnet, dass** die Dichtung als umlaufende Dichtung an dem lösbaren Gehäuseteil vorgesehen ist.

9. Akkupack (10) nach einem der Ansprüche 5 bis 8,
**dadurch gekennzeichnet, dass** die Dichtung (44) eine Nut-Feder-Geometrie und/oder eine Elastomerdichtung umfasst.

10. Elektrohandwerkzeuggerät mit einem Elektromotor sowie wenigstens einem hiermit lösbar verbindbaren Akkupack (10) nach einem der Ansprüche 1 bis 9, wobei wenigstens eine Schnittstelle zur mechanischen und elektrischen Verbindung des Akkupacks (10) mit dem Elektrohandwerkzeuggerät vorgesehen ist.

## Claims

1. A battery pack (10), in particular for an electric hand tool, with:
at least one substantially cylindrical battery cell (20) with a lateral surface and two poles in the region of the end faces and
a housing for receiving the at least one rechargeable cell (20),
the housing having ventilation recesses (18a, 18b) via which cooling air from the environment can penetrate into the interior of the housing and be released again to the environment, and a cell carrier (12) for storing the at least one battery cell (20) in the interior of the housing,
**characterized in that** the cell carrier (12) has airtightly closed side walls (54) with a number of bearing sections (32a, 32b) for mounting the pole-side end sections of the battery cells (20) to be accommodated, the inner circumference of which bearing sections corresponds to the outer circumference of the battery cells (20) to be accommodated in the region of their pole-side end sections, in such a way that the battery cells (20) are held at a distance from one another and in the region of their outer surface the cooling air in the interior of the housing can flow around them at least in sections,
wherein the battery cell (20) is mounted in the cell carrier (12) in the region of its pole-side end portions in a fixed manner and with virtually no play, so that the resulting pole regions (P1, P2) of the battery pack (20) are accommodated in an airtight manner within the housing,
and wherein the cell carrier has at least two pressure compensation devices which, in the event of a predetermined overpressure at one of the pole regions of the battery pack, enable pressure compensation, in particular with the interior of the housing and, via the ventilation recesses of the housing, with the environment, and each of which is associated with one of the side walls (54) of the cell carrier (12).

2. The battery pack (10) according to claim 1,
**characterized in that** the battery pack (10) comprises a number of battery cells (20) arranged substantially parallel to one another within the cell carrier (12), which battery cells (20) are arranged in the cell carrier in the region of their pole-side end sections in such a way that the poles (20a, 20b) of the battery cells (20) do not touch one another.

3. The battery pack (10) according to claim 1 or 2,
**characterized in that** the side walls (54) of the cell carrier (12) are closed and have lateral recesses for electrically contacting the poles (20a, 20b) of the accumulator cells (20) only in the region of the bearing sections (32a, 32b).

4. The battery pack (10) according to one of the preceding claims,
**characterised in that** the pressure compensation device comprises a predetermined breaking point (52), a recess covered with a diaphragm or a sealing part, or a valve.

5. The battery pack (10) according to any of the foregoing claims,
**characterised in that** the housing comprises at least one housing part detachable from the rest of the housing and at least one seal (44) provided between the detachable housing part and the rest of the housing for airtightly sealing the pole regions (P1, P2) of the battery pack (10).

6. The battery pack (10) according to claim 5,
**characterised in that** the at least one detachable housing part comprises at least one cover (16) which is detachably connectable to the cell carrier (12).

7. The battery pack (10) according to claim 5 or 6,
**characterised in that** the detachable housing part comprises at least one housing cover (16) which can be placed on the cell carrier (12) and has, for example, the ventilation recesses (18a, 18b) and/or a structure for detachable connection to an electric hand tool and/or contact elements for electrical connection to an electric hand tool or a battery charger

8. The battery pack according to claim 5, 6 or 7,
**characterised in that** the seal is provided as a circumferential seal on the detachable housing part.

9. The battery pack (10) according to one of claims 5 to 8,
**characterised in that** the seal (44) comprises a tongue and groove geometry and/or an elastomeric seal.

10. An electric hand tool with an electric motor and at least one battery pack (10) which can be detachably connected thereto according to one of claims 1 to 9, wherein at least one interface is provided for the mechanical and electrical connection of the battery pack (10) to the electric hand tool.

## Revendications

1. Un bloc de batteries (10), en particulier pour un outil à main électrique, avec :
au moins un élément de batterie (20) sensiblement cylindrique avec une surface latérale et deux pôles dans la région des faces frontales et un boîtier pour recevoir au moins une pile rechargeable (20),
le boîtier présentant des évidements de ventilation (18a, 18b) par lesquels l'air de refroidissement de l'environnement peut pénétrer à l'intérieur du boîtier et être à nouveau libéré dans l'environnement, et un support de cellule (12) pour stocker la ou les cellules de batterie (20) à l'intérieur du boîtier,
**caractérisé en ce que** le support de cellules (12) présente des parois latérales (54) fermées de manière étanche à l'air avec un certain nombre de sections de palier (32a, 32b) pour la fixation des sections d'extrémité côté pôle des cellules de batterie (20) à recevoir, dont la circonférence intérieure correspond à la circonférence extérieure des cellules de batterie (20) à recevoir dans la zone de leurs sections d'extrémité côté pôle, de telle sorte que les cellules de batterie (20) sont maintenues à distance les unes des autres et, dans la zone de leur surface extérieure, l'air de refroidissement à l'intérieur du boîtier peut circuler autour d'elles au moins par sections,
dans lequel l'élément de batterie (20) est monté de manière fixe et pratiquement sans jeu dans le support d'élément (12) dans la zone de ses parties d'extrémité côté pôle, de sorte que les zones de pôle résultantes (P1, P2) du bloc de batterie (20) sont logées de manière étanche à l'air dans le boîtier, et dans lequel le support de cellules présente au moins deux dispositifs de compensation de pression qui, en cas de surpression prédéterminée dans l'une des zones polaires du bloc de batteries, permettent une compensation de pression, en particulier avec l'intérieur du boîtier et, par l'intermédiaire des évidements d'aération du boîtier, avec l'environnement, et qui sont chacun associés à l'une des parois latérales (54) du support de cellules (12).

2. Le bloc de batteries (10) selon la revendication 1,
**caractérisé en ce que** le bloc de batteries (10) comprend un certain nombre de cellules de batterie (20) disposées sensiblement parallèlement les unes aux autres à l'intérieur du support de cellules (12), lesquelles cellules de batterie (20) sont disposées dans le support de cellules dans la région de leurs sections d'extrémité côté pôle de telle sorte que les pôles (20a, 20b) des cellules de batterie (20) ne se touchent pas.

3. Le bloc de batteries (10) selon la revendication 1 ou 2,
**caractérisé en ce que** les parois latérales (54) du support de cellules (12) sont fermées et présentent des évidements latéraux pour la mise en contact électrique des pôles (20a, 20b) des cellules d'accumulateurs (20) uniquement dans la zone des sections de support (32a, 32b).

4. Le bloc de batteries (10) selon l'une des revendications précédentes,
**caractérisé en ce que** le dispositif de compensation de pression comprend un point de rupture prédéterminé (52), un évidement recouvert d'une membrane ou d'une pièce d'étanchéité, ou une soupape.

5. Le bloc de batteries (10) selon l'une des revendications précédentes,
**caractérisé en ce que** le boîtier comprend au moins une partie de boîtier détachable du reste du boîtier et au moins un joint (44) prévu entre la partie de boîtier détachable et le reste du boîtier pour sceller de manière étanche à l'air les régions polaires (P1, P2) de la batterie (10).

6. Le bloc de batteries (10) selon la revendication 5,
**caractérisé en ce que** la au moins une partie de boîtier détachable comprend au moins un couvercle (16) qui peut être relié de manière détachable au support de cellules (12).

7. Le bloc de batteries (10) selon la revendication 5 ou 6,
**caractérisé en ce que** la partie détachable du boîtier comprend au moins un couvercle de boîtier (16) qui peut être placé sur le support de piles (12) et présente, par exemple, les évidements de ventilation (18a, 18b) et/ou une structure pour la connexion détachable à un outil à main électrique et/ou des éléments de contact pour la connexion électrique à un outil à main électrique ou à un chargeur de batterie

8. Le bloc de batteries selon la revendication 5, 6 ou 7,
**caractérisé en ce que** le joint est prévu comme un joint circonférentiel sur la partie détachable du boîtier.

9. Le bloc de batteries (10) selon l'une des revendications 5 à 8,
**caractérisé en ce que** le joint (44) comprend une géométrie à rainure et languette et/ou un joint élastomère.

10. Un outil à main électrique avec un moteur électrique et au moins un bloc de batteries (10) qui peut y être connecté de manière amovible selon l'une des revendications 1 à 9, dans lequel au moins une interface est prévue pour la connexion mécanique et électrique du bloc de batteries (10) à l'outil à main électrique.
